# EUROPÄISCHE PATENTSCHRIFT

(11) **EP 0 544 054 B1**
(45) Veröffentlichungstag und Bekanntmachung des Hinweises auf die Patenterteilung: **07.09.1994**
(21) Anmeldenummer: 92109820.8
(22) Anmeldetag: 11.06.1992
(51) Int. Cl.: F16B 13/02, F16B 5/00

(54) **Befestigungselement**
Fastener
Elément de fixation

(30) Priorität: 23.11.1991 DE 9114624 U
(43) Veröffentlichungstag der Anmeldung: 02.06.1993
(73) Patentinhaber: HARDO- BEFESTIGUNGEN GMBH, 59823 Arnsberg (DE)
(72) Erfinder: Fitzke, Michael, W-5787 Olsberg (DE); Bremkes, Peter, W-5757 Wickede/Ruhr (DE); Peetz, Franz-Josef, W-5760 Arnsberg 2 (DE); Anhuth, Arno, W-5768 Sundern (DE)
(74) Vertreter: Fritz, Edmund Lothar, Dipl.-Chem.

(56) Entgegenhaltungen:
- EP-A- 0 074 469
- AT-B- 251 258
- CH-A- 635 907
- DE-B- 1 400 931

## Beschreibung

Die vorliegende Erfindung betrifft ein Befestigungselement für die Befestigung von Dämmstoffplatten oder dergleichen an einer Unterkonstruktion, mit einem Dübel, der eine Druckplatte aus Kunststoff aufweist und eine mit der Druckplatte einstückige Hülse, in die gegebenenfalls ein Spreizstift einschlagbar ist, so daß der Dübel in einem vorderen Spreizbereich aufspreizt. Derartige Befestigungselemente sind aus dem Stand der Technik bekannt, beispielsweise aus dem europäischen Patent 0 074 469. Bei diesem Befestigungselement hat die Dübelhülse einen oberen, der Druckplatte benachbarten glatten Abschnitt und einen unteren widerhakenartig gezahnten Abschnitt, der gegenüberliegende Längsschlitze aufweist und somit den spreizwirksamen Bereich des Dübels bildet. Um das Aufspreizen zu gewährleisten ist außerdem der Innendurchmesser der Dübelhöhlung in dem widerhakenartig profilierten unteren Abschnitt des Dübels geringer als in dem oberen glatten Abschnitt, so daß der Spreizstift ohne Schwierigkeiten in den oberen Teil der Dübelhöhlung eingeführt werden kann und erst beim weiteren Eindringen des Spreizstifts in den unteren Teil der Dübelhöhlung ein Aufspreizen erfolgt.

Die Aufgabe der vorliegenden Erfindung besteht darin, ein Befestigungselement der eingangs genannten Art dahingehend zu verbessern, daß der Dübel eine bessere Verankerung im Bohrloch gewährleistet.

Die Lösung dieser Aufgabe liefert ein Befestigungselement mit den kennzeichnenden Merkmalen des Hauptanspruchs. Die Dübelhülse weist erfindungsgemäß einen profilierten Schaft mit parallelen beabstandeten umlaufenden Finnen oder Lamellen auf. Zur Aussteifung und Abstützung dieser Finnen sind über den Umfang verteilt mit Abstand voneinander im profilierten Bereich des Schafts außen in axialer Richtung verlaufende Längsstege vorgesehen. Im profilierten Teil des Schafts bleiben jeweils zwischen den Finnen kürzere ringförmige Abschnitte mit einem Dübelaußendurchmesser stehen, der demjenigen im oberen glatten Teil des Dübels entspricht. Die Finnen weisen dagegen einen geringfügig größeren Außendurchmesser auf, der vorzugsweise auch etwas größer ist, als der Durchmesser des Bohrlochs. In Längsrichtung gesehen befinden sich vorzugsweise zwischen den Finnen und den ringförmigen Abschnitten Vertiefungen, die in Umfangsrichtung jeweils zwischen zwei Längsstegen angeordnet sind und die ein Ausweichen der Finnen zur Druckplatte hin beim Eintreiben des Dübels in das Bohrloch ermöglichen.

Erfindungsgemäß sind die Finnen vorzugsweise in einem oberen Bereich des profilierten Teils des Schafts im Umriß kreisrund ausgebildet, während die Finnen in einem unteren Bereich zur Spitze des Schafts hin vierseitig abgefräst sind, so daß sich für diese Finnen ein annähernd achteckiger Umriß ergibt, wobei allerdings vier kürzere Seiten des Achtecks gemäß dem ursprünglichen Umriß der Finnen bogenförmig verlaufen. Der durch dieses Abfräsen verkleinerte Umriß der Finnen hat den Vorteil, daß durch den Bohrvorgang entstandenes im Bohrloch befindliches Bohrmehl und Dämmstoffpartikel beim Einbringen des Dübels in das Bohrloch sich nicht vor die vorderen Finnen setzen und dadurch das weitere Eintreiben des Dübels verhindern. Vielmehr werden das Bohrmehl und die Dämmstoffpartikel beim Einbringen des Dübels seitlich nach außen zur Bohrlochwandung hin verdrängt und haben zwischen den flachen abgefrästen Kanten der Finnen und der Bohrlochwandung ausreichend Raum auszuweichen. Es genügt dabei, daß die Finnen im vorderen Bereich des profilierten Schaftteils abgefräst sind, da, wenn der Dübel erst einmal ein Stück weit in das Bohrloch eindrungen ist, ohne daß sich Bohrmehl in größeren Mengen vor die vorderen Finnen setzt, das weitere Eindringen des Dübels dann leichter vor sich geht.

Durch die besondere Ausbildung des profilierten Teils des Schafts des erfindungsgemäßen Dübels, weist dieser bereits für sich allein nach dem Eindringen in das Bohrloch eine relativ hohe Haltekraft auf, denn die Finnen krallen sich quasi in der Bohrlochwandung fest, so daß der Dübel auch ohne Spreizstift verwendet werden kann.

Der Dübel eignet sich insbesondere gut für die Befestigung in Bims oder schlackeartigem Gestein.

Im folgenden wird die vorliegende Erfindung anhand eines Ausführungsbeispiels unter Bezugnahme auf die beiliegenden Zeichnungen näher beschrieben. Dabei zeigen
- Fig. 1: eine Ansicht eines erfindungsgemäßen Dübels;
- Fig. 2: einen Längsschnitt durch den Dübel entlang der Linie II-II von Fig. 5;
- Fig. 3: einen weiteren Längsschnitt durch den Dübel entlang der Linie III-III von Fig. 5;
- Fig. 4: einen Querschnitt durch den Dübel entlang der Linie IV-IV von Fig. 1;
- Fig. 5: einen Querschnitt durch den Dübel entlang der Linie V-V von Fig. 1.

Das erfindungsgemäße Befestigungselement besteht aus einem Dübel 11 mit einer Dübelhöhlung 14, in die ein Spreizstift 21 einschlagbar ist. Die Dübelhöhlung 14 weist einen oberen zylindrischen Abschnitt 14a mit einem größeren Innendurchmesser und einen unteren zylindrischen Abschnitt 14b mit einem geringeren Durchmesser auf, so daß sich der Dübel beim Einschlagen des Spreizstifts 21 im unteren Teil, der die Höhlung 14b mit geringerem Innendurchmesser aufweist, aufspreizt. Der obere Teil 13a des Schafts 13 des Dübels 11 ist außen im wesentlichen glatt, während der untere Teil 13b des Schafts, in dem der Dübel aufspreizt, außen profiliert ist. Dieser untere profilierte Teil 13b des Schafts weist außerdem zwei gegenüberliegende Längsschlitze 15a, 15b auf, die sich nicht oder nur ein kurzes Stück in den oberen glatten Teil 13a des Schafts erstrecken.

Der Aufbau des unteren strukturierten Teils 13b des Schafts wird nachfolgend näher beschrieben. Dieser spreizwirksame Teil des Schafts weist außen in gleichen Abständen parallele umlaufende Finnen 16, 17 auf. Diese Finnen 16 sind im oberen Bereich des profilierten Teils 13b des Schafts bis auf die Unterbrechung durch die Längsschlitze 15a, 15b kreisrund. Dagegen sind die Finnen 17 etwa in der unteren Hälfte des profilierten Teils 13b des Schafts an vier Seiten jeweils ein Stück abgefräst, so daß sich für diese unteren Finnen 17 ein annähernd achteckiger Umriß ergibt, wobei durch das Abfräsen an vier Seiten sich vier längere gerade Kanten 17a ergeben, die jeweils in der Verlängerung einen rechten Winkel miteinander einschließen und zwischen diesen geraden Kanten kürzere bogenförmige Kantenstücke 17b liegen, die die geraden Kantenabschnitte 17a verbinden. Die bogenförmigen Kantenstücke 17b entsprechen dem ursprünglich kreisförmigen Umriß der Finnen vor dem Abfräsen wie bei den oberen kreisrunden Finnen 16.

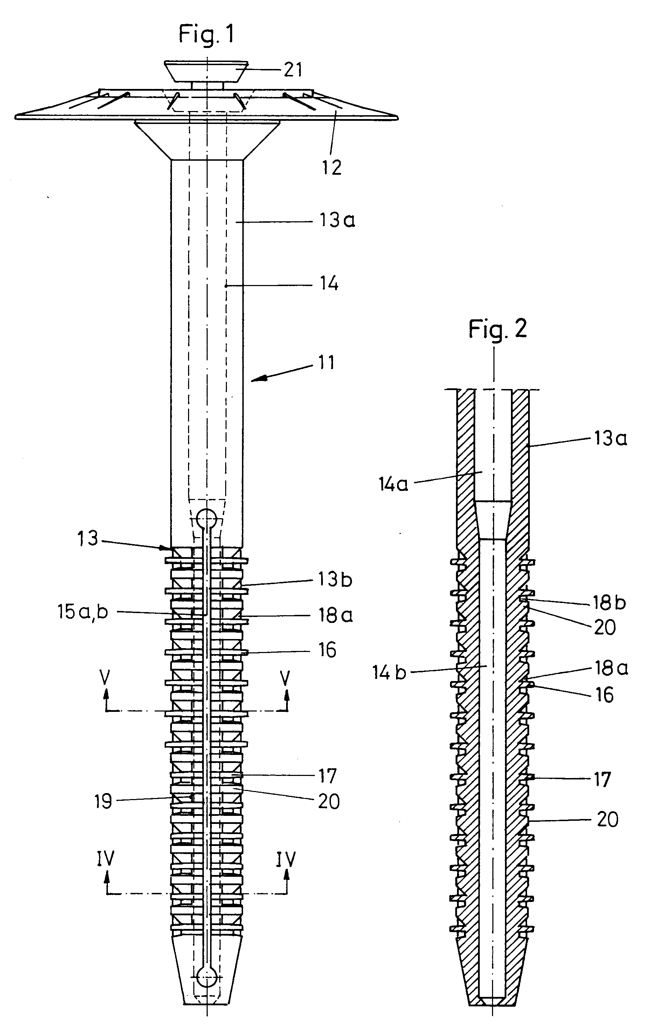

Zur Aussteifung des profilierten Teils 13b des Schafts sind über den Umfang verteilt insgesamt sechs mit Abstand zueinander angeordnete sich in Längsrichtung erstreckende Stege 19 vorgesehen. Diese Längsstege 19 erstrecken sich über den ganzen Bereich des Schafts, in dem die Finnen 17, 16 vorgesehen sind und stützen die Finnen gegen zu starkes Umbiegen oder Abbrechen beim Auftreten in axialer Richtung des Schafts wirkender Kräfte. Die Längsstege 19 sind am Schaft so angeordnet, daß die Finnen 16 im oberen Bereich gegenüber den Stegen 19 etwa einen Millimeter radial vorstehen und die Finnen 17 im unteren Bereich gegenüber den Stegen nur noch geringfügig radial vorstehen. Jeweils zwischen zwei Längsstegen 19 sind über den ganzen mit Finnen 16, 17 versehenen Bereich des Schafts 13b Vertiefungen 18 angeordnet. Dabei sind in Längsrichtung gesehen zwischen jeweils zwei Finnen 16, 17 jeweils zwei Vertiefungen 18 angeordnet, wobei zwischen diesen beiden Vertiefungen 18 jeweils ringförmige Abschnitte 20 liegen, die in ihrem Außendurchmesser demjenigen des glatten Teils 13a des Schafts entsprechen. Diese ringförmigen Abschnitte 20 erstrecken sich am Umfang jeweils von einem Längsschlitz 15a zum anderen Längsschlitz 15b. In Umfangsrichtung gesehen wechseln sich vor den Finnen und hinter den Finnen somit jeweils immer Längsstege 19 und Vertiefungen 18 ab. Die Vertiefungen 18 sind wie man aus den Figuren 1 und 2 erkennen kann jeweils vor bzw. hinter den Finnen 16, 17 im Längsschnitt unterschiedlich gestaltet. Es folgt im Bereich der Vertiefungen von einer Finne 16, 17 aus in Achsrichtung zur Dübelspitze hin zunächst eine im Längsschnitt annähernd rechteckige Vertiefung 18b. Auf diese Vertiefung 18b folgt dann zur Dübelspitze hin ein Abschnitt 20, dessen Durchmesser demjenigen des glatten Teils 13a des Schafts entspricht. Dann folgt eine Vertiefung 18a, die im Längsschnitt keilförmig ausgebildet ist und zwar so, daß der tiefste Punkt der Vertiefung an der Basis der sich daran zur Dübelspitze hin anschließenden Finne 16, 17 liegt. Auf die Finne 16 folgt dann wieder eine Vertiefung 18b mit etwa rechteckigem Längschnitt (die geringfügige Schräge dient der Entformung) und so weiter. Durch die keilförmigen Vertiefungen 18a können beim Einbringen des Dübels in das Bohrloch die Finnen 16, 17, die ja im Durchmesser den Innendurchmesser des Bohrlochs geringfügig übersteigen, in Richtung auf die Druckplatte 12 ausweichen. Die Finnen bestehen aus einem ausreichend elastischen Kunststoff. Hingegen besteht nach dem Einbringen des Dübels 11 in das Bohrloch für die Finnen 16, 17 aufgrund der schmaleren Ausbildung der vor den Finnen liegenden Vertiefungen 18b für die Finnen nur eine geringere Möglichkeit bei Ausübung einer Zugkraft auf das Befestigungselement in Richtung auf die Dübelspitze auszuweichen. Dadurch wird das Ausziehen des Dübels auch bereits ohne Verwendung eines Spreizstifts verhindert.

Die Längsstege 19 verbinden in axialer Richtung jeweils die ringförmigen Abschnitte 20 (siehe Fig. 1), wobei die ringförmigen Abschnitte 20 bei dem Ausführungsbeispiel gegenüber den Längsstegen 19 geringfügig radial vorstehen.

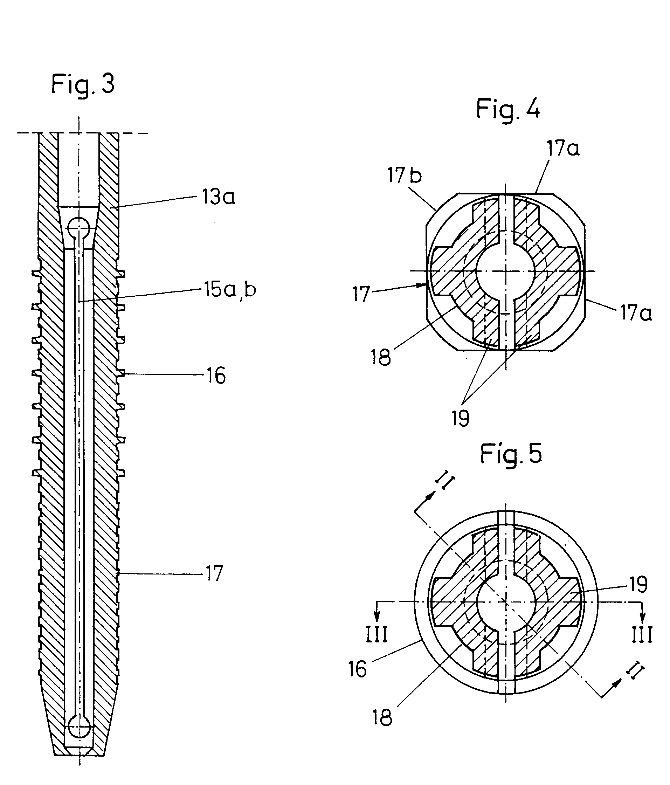

Bei dem in den Zeichnungen dargestellten Ausführungsbeispiel handelt es sich um einen Dübel, der für ein 10 mm Bohrloch vorgesehen ist. Der Durchmesser der Finnen 16 im oberen Bereich beträgt 11 mm und ist damit größer als der Innendurchmesser des Bohrlochs. Der Außendurchmesser des glatten Teils des Schafts 13a und der ringförmigen Abschnitte 20 beträgt etwa 9,5 mm, der Durchmesser im Bereich der Längsstege 19 beträgt etwa 9 mm. Der Abstand zweier gegenüberliegender gerader Kantenabschnitte 17a (siehe Fig. 4) beträgt ebenfalls etwa 9,5 mm, d. h., der Dübel ist im abgefrästen Bereich dieser vorderen Finnen 17 geringfügig schmaler als der Innendurchmesser des Bohrlochs. Dadurch, daß die unteren Finnen 17 an vier Seiten jeweils abgefräst sind, verbleibt nach dem Einbringen des erfindungsgemäßen Dübels 11 im Bohrloch zwischen den abgeflachten Kanten 17a der unteren Finnen und der Bohrlochwandung genügend Raum für das Bohrmehl, so daß sich dieses nicht oder nur in geringerem Maße zwischen den Finnen 17 oder in den Vertiefungen 18 absetzt. Dadurch wird das Eintreiben des Dübels erleichtert.

## Patentansprüche

1. Befestigungselement für die Befestigung von Dämmstoffplatten oder dergleichen an einer Unterkonstruktion, mit einem Dübel, der eine Druckplatte aus Kunststoff aufweist und eine mit der Druckplatte einstückige Hülse, in die gegebenenfalls ein Spreizstift einschlagbar ist, wobei die Dübelhülse einen oberen, der Druckplatte benachbarten glatten Abschnitt und einen unteren profilierten Abschnitt mit Längsschlitzen aufweist, dadurch gekennzeichnet, daß im profilierten Abschnitt (13b) der Dübelhülse parallele beabstandete umlaufende in axialer Richtung etwas nachgebende Finnen oder Lamellen (16, 17) vorgesehen sind, deren Außendurchmesser den Außendurchmesser der Dübelhülse im oberen glatten Abschnitt (13a) übersteigt, und daß im profilierten Abschnitt (13b) der Dübelhülse in axialer Richtung verlaufende die Finnen (16, 17) abstützende Längsstege (19) vorgesehen sind.

2. Befestigungselement nach Anspruch 1, dadurch gekennzeichnet, daß die Dübelhülse im profilierten Abschnitt (13b) in axialer Richtung jeweils vor und hinter den Finnen jeweils radial einspringende Vertiefungen (18) aufweist.

3. Befestigungselement nach Anspruch 1 oder 2, dadurch gekennzeichnet, daß jeweils oberhalb der Finnen (16, 17) im Längsschnitt keilförmige Vertiefungen (18a) liegen, deren tiefste Punkte sich jeweils an der Basis der Finnen befinden, während jeweils unterhalb der Finnen schmalere im Längsschnitt annähernd rechteckige Vertiefungen (18b) liegen.

4. Befestigungselement nach einem der Ansprüche 1 bis 3, dadurch gekennzeichnet, daß die Vertiefungen (18a, 18b) in Umfangsrichtung jeweils zwischen zwei Längsstegen (19) angeordnet sind.

5. Befestigungselement nach einem der Ansprüche 1 bis 4, dadurch gekennzeichnet, daß im vorderen Bereich des profilierten Abschnitts (13b) der Dübelhülse Finnen (17) mit geringeren Abmessungen angeordnet sind, die wenigstens in Teilbereichen etwa dem Außendurchmesser des glatten oberen Abschnitts (13a) der Dübelhülse entsprechen.

6. Befestigungselement nach einem der Ansprüche 1 bis 5, dadurch gekennzeichnet, daß die unteren Finnen (17) an vier Seiten abgeflachte, insbesondere abgefräste Kanten (17a) aufweisen.

7. Befestigungselement nach einem der Ansprüche 1 bis 6, dadurch gekennzeichnet, daß der Durchmesser der oberen Finnen (16) geringfügig größer ist und der Durchmesser der Finnen (17) im Bereich der abgeflachten Kanten (17a) geringfügig geringer ist als der Nenndurchmesser des Dübels bzw. der Innendurchmesser des Bohrlochs, für das der Dübel vorgesehen ist.

## Claims

1. Fastening element for fastening plates of insulating material or the like to a sub-structure, with a dowel comprising a pressure plate of plastics material and a sleeve formed integrally with the pressure plate and into which a spreading pin may be driven if necessary, the dowel sleeve comprising an upper smooth section adjacent to the pressure plate and a lower grooved section having longitudinal slots, characterised in that in the grooved section (13b) of the dowel sleeve there are provided at parallel distances circumferential fins or lamellae (16, 17) which are slightly flexible in axial direction and the outer diameter of which exceeds the outer diameter of the dowel sleeve at the upper smooth section (13a), and that in the grooved section (13b) of the dowel sleeve there are provided longitudinal webs (19) extending in axial direction and supporting the fins (16, 17).

2. Fastening element as claimed in claim 1, characterised in that the dowel sleeve comprises at its grooved section (13b) radially contracted depressions (18) in each case in front of and behind the fins in axial direction.

3. Fastening element as claimed in claim 1 or 2, characterised in that above the fins (16, 17) there are provided depressions (18a) which are wedge-shaped in longitudinal section, the deepest points of which are positioned in each case at the bases of the fins, narrower depressions (18b) which are approximately rectangular in longitudinal section being in each case positioned below the fins.

4. Fastening element as claimed in any one of claims 1 to 3, characterised in that the depressions (18a, 18b) are arranged in circumferential direction in each case between two longitudinal webs (19).

5. Fastening element as claimed in any one of claims 1 to 4, characterised in that in the front region of the grooved section (13b) of the dowel sleeve fins (17) with smaller dimensions are arranged which correspond, at least in partial regions, approximately to the outer diameter of the smooth upper section (13a) of the dowel sleeve.

6. Fastening element as claimed in any one of claims 1 to 5, characterised in that the lower fins (17) comprise at four sides flattened, in particular milled off edges (17a).

7. Fastening element as claimed in any one of claims 1 to 6, characterised in that the diameter of the upper fins (16) is slightly larger and the diameter of the fins (17) in the region of the flattened edges (17a) is slightly smaller than the nominal diameter of the dowel or the inner diameter of the borehole for which the dowel is destined.

## Revendications

1. Elément de fixation pour fixer des plaques en matière isolante ou autre choses semblables sur une structure de soubassement avec une cheville comprenant une plaque de pression en matière synthétique et une douille d'une seule pièce avec la plaque de pression dans laquelle un goujon d'écartement peut être enfoncé au besoin, la douille de la cheville comprenant une section supérieure lisse près de la plaque de pression et une section inférieure profilée avec des fentes longitudinales, caractérisé en ce que des ailerons ou lamelles (16, 17) périphériques et à distances parallèles sont prévus dans la section profilée (13b) de la douille de la cheville qui sont un peu flexible en direction axiale, le diamètre extérieur des ailerons dépassant le diamètre extérieur de la douille de la cheville dans la section supérieure lisse (13a), et que des traverses longitudinales (19) étayant les ailerons (16, 17) et s'étendant en direction axiale sont prévues dans la section profilée (13b) de la douille de la cheville.

2. Elément de fixation selon la revendication 1, caractérisé en ce que la douille de la cheville comprend dans la section profilée (13b) des approfondissements (18) en forme de contraintes radiales chaque fois en direction axiale devant et derrière les ailerons.

3. Elément de fixation selon la revendication 1 ou 2, caractérisé en ce que des approfondissements (18a) avec un profil longitudinal en forme de coin se trouvent au-dessus des ailerons (16, 17), les points les plus profonds de ces approfondissements sont situés à la base des ailerons, et des approfondissements plus étroits (18b) avec un profil longitudinal environ rectangulaire se trouvent au-dessous des ailerons.

4. Elément de fixation selon une des revendications 1 à 3, caractérisé en ce que les approfondissements (18a, 18b) sont arrangés en direction péripherique entre deux traverses longitudinales (19).

5. Elément de fixation selon une des revendications 1 à 4, caractérisé en ce que des ailerons (17) avec des dimensions plus petits sont arrangés dans la région de devant de la section profilée (13b) de la douille de la cheville, ces ailerons étant conformes au moins dans des régions partielles avec le diamètre extérieur de la section supérieure lisse (13a) de la douille de la cheville.

6. Elément de fixation selon une des revendications 1 à 5, caractérisé en ce que les ailerons inférieurs (17) comprennent à quatre côtés des arêtes aplaties, en particulier des arêtes fraisées (17a).

7. Elément de fixation selon une des revendications 1 à 6, caractérisé en ce que le diamètre des ailerons supérieurs (16) est un peu plus grand et le diamètre des ailerons (17) dans la région des arêtes aplaties (17a) est un peu plus petit que le diamètre nominal de la cheville ou le diamètre intérieur du alésage pour lequelle la cheville est prévue.
